# EUROPEAN PATENT APPLICATION

(11) **EP 1 254 695 A1**
(43) Date of publication of application: **06.11.2002**
(21) Application number: 02252894.7
(22) Date of filing: 24.04.2002
(51) Int. Cl.: B01D 53/047, F25J 3/04

(54) **Process for removing carbon dioxide and water vapour from a feed gas**

(30) Priority: 25.04.2001 US 841984
(71) Applicant: THE BOC GROUP, INC., Murray Hill, New Providence, New Jersey 07974-2082 (US)
(72) Inventor: Deng, Shuguang, Hillsborough, New Jersey 08844 (US)
(74) Representative: Wickham, Michael

(57) **Abstract**

The present invention discloses a pressure swing adsorption process for separating carbon dioxide and water vapour from a gas stream. By passing the gas stream through an adsorbent bed which has been subjected to a bake out process either prior to beginning the pressure swing adsorption process or intermittently during the pressure swing adsorption process, an improved separation of carbon dioxide and water vapour is achieved.

## Description

The present invention relates to a process for removing carbon dioxide and water vapour from a feed gas. The method may be used in the purification of air upstream of its separation.

Adsorption is well established as a unit operation for the production of pure gases, the purification of gases, the separation of gas mixtures, the further physical and/or chemical handling of gases or gas mixture, and the treatment of fluid waste streams. Purification and separation of atmospheric air comprises one of the main areas in which adsorption methods are widely used. For an increase of their efficiency, novel adsorbent formulations and processes of their utilization are being sought permanently.

One of the areas of strong commercial and technical interest represents pre-purification of air before its cryogenic distillation. Conventional air separation units (ASUs) for the production of nitrogen, N₂, and oxygen, O₂, and also for argon, Ar, by the cryogenic separation of air are basically comprised of two or at least three, respectively, integrated distillation columns which operate at very low temperatures. Due to these low temperatures, it is essential that water vapour, H₂O, and carbon dioxide, CO₂, is removed from the compressed air feed to an ASU. If this is not done, the low temperature sections of the ASU will freeze up making it necessary to halt production and warm the clogged sections to revaporize and remove the offending solid mass of frozen gases. This can be very costly. It is generally recognized that, in order to prevent freeze up of an ASU, the content of H₂O and CO₂ in the compressed air feed stream must be less than 0.1 ppm and 1.0 ppm or lower, respectively. Besides, other contaminants such as low-molecular-weight hydrocarbons and nitrous oxide, N₂O, may also be present in the air feed to the cryogenic temperature distillation columns, and they must as well be removed up-front the named separation process to prevent hazardous process regime.

A process and apparatus for the pre-purification of air must have the capacity to constantly meet the above levels of contamination, and hopefully exceed the related level of demand, and must do so in an efficient manner. This is particularly significant since the cost of the pre-purification is added directly to the cost of the product gases of the ASU.

Current commercial methods for the pre-purification of air include reversing heat exchangers, temperature swing adsorption, pressure swing adsorption and catalytic pre-purification techniques.

Reversing heat exchangers remove water vapour and carbon dioxide by alternately freezing and evaporating them in their passages. Such systems require a large amount, typically 50 % or more, of product gas for the cleaning, i.e., regenerating of their passages. Therefore, product yield is limited to about 50 % of feed. As a result of this significant disadvantage, combined with characteristic mechanical and noise problems, the use of reversing heat exchangers as a means of air pre-purification in front of ASUs has steadily declined over recent years.

In temperature swing adsorption (TSA) pre-purification of air, the impurities are removed from air at relatively low ambient temperature, typically at about 5 - 15°C, and regeneration of the adsorbent is carried out at elevated temperatures, e.g., in a region of about 150 - 250°C. The amount of product gas required for regeneration is typically only about 10 - 25% of the product gas. Thus, a TSA process offers a considerable improvement over that of utilizing reversing heat exchangers.
However, TSA processes require evaporative cooling or refrigeration units to chill the feed gas and heating units to heat the regeneration gas. They may, therefore, be disadvantageous both in terms of capital costs and energy consumption despite of being more cost-effective than the reversing heat exchangers' principle referred to above.

Pressure swing adsorption (PSA) (or pressure-vacuum swing adsorption (PVSA)) processes are an attractive alternative to TSA processes, for example, as a means of air pre-purification, since both adsorption and regeneration via desorption, are performed, as a rule, at ambient temperature. PSA processes, in general, do require substantially more regeneration gas than TSA processes. This can be disadvantageous if high recovery of cryogenically separated products is required. If a PSA air pre-purification unit is coupled to a cryogenic ASU plant, a waste stream from the cryogenic section, which is operated at a pressure close to ambient pressure, is used as purge for regenerating the adsorption beds. Feed air is passed under pressure through a layer of particles of activated alumina, to remove the bulk of H₂O and CO₂, and then through a layer of zeolite particles such as of the FAU structural type, e.g., NaX zeolite, to remove the remaining low concentrations of H₂O and CO₂. Arrangement of the adsorbent layers in this manner is noted to increase the temperature effects, i.e., temperature drops during desorption, in the PSA beds. In other configurations, only activated alumina is used to remove both H₂O and CO₂ from feed air. This arrangement is claimed to reduce the temperature effects.

It will be appreciated that, although many pre-purification methodologies based on PSA have been proposed in the literature, a few of those are actually being used commercially due to high capital costs associated therewith.

In general, known PSA pre-purification processes require a minimum of 25%, typically 40 - 50%, of the feed as purge gas. As a result of having low adsorbent specific product, such processes have high capital cost. Reduction in capital costs of air pre-purification systems is particularly important when a large plant is contemplated. Therefore, it will be readily appreciated that, for large plants, improvements in pre-purification system operation can result into considerable cost savings.

However, past PSA processes have not been able to remove carbon dioxide to less than one part per million. The only means to achieve this lower level using standard PSA processes is to increase the size of the adsorbent beds. However, due to the short cycle times of PSA PPU processes, larger adsorbent beds result in higher vent loses and consequently poor plant economy performance. It has now been discovered that by heating the adsorbent bed prior to the start of the PSA PPU cycle or intermittently throughout the cycle will improve the removal of carbon dioxide and achieve levels approaching one part per billion prior to the introduction of the air into a cryogenic distillation unit.

According to the present invention there is provided a method as claimed in claim 1 below.

The present invention provides for an improved pressure swing adsorption process for removing carbon dioxide and water from a feed gas using an adsorbent bed typically comprising a mixture of alumina and a zeolite and/or an activated carbon. The improvement comprises heating the adsorbent bed prior to or intermittently during the PSA by heating the adsorbent bed to a temperature 50 to 750°C under the flow of a dry inert gas stream. CO₂ levels can be lowered to levels below one part per million without resorting to larger bed sizes nor long periods to achieve a steady state cycle. As such, the present invention not only achieves a lower carbon dioxide in the product air being sent to the cryogenic distillation unit but will also provide for an improved PSA PPU process whereby steady stages achieved quicker while requiring smaller adsorption vessels thereby lowering vent loss and pressure drops during the feed and purge steps. This will provide for a more economical pressure swing adsorption process.

Preferably, the process according to the invention employs from two adsorbent beds up to eight adsorbent beds. The adsorbent materials employed in the adsorbent beds may comprise activated alumina, typically used to remove water vapour and an X type zeolite, such as 13X zeolite, which may be used to remove the carbon dioxide. Typically, the X type zeolite is a sodium X zeolite with a silicon to aluminum elemental ratio of the zeolitic phase between 0.9 and 1.3, preferably 0.9 and 1.15 and most preferably between 0.95 and 1.08. The ratio of activated alumina to zeolite in the adsorbent bed may range from about 10% to 90%.

In an alternative embodiment, activated carbon may be employed in place of the X zeolite or a mixture comprising zeolite and activated carbon in ratios of about 10% to about 90% by weight zeolite can be employed in the adsorbent bed.

The adsorbent beds may be baked out using any type of heater which is commercially available and known to those skilled in the art. The bake out is preferably performed at temperatures ranging from about 50°C to about 750°C by passing an inert gas stream (which can be nitrogen, air, helium or other gas mixture of inert gases) through the bed at the desired elevated temperature. This bake out of the adsorbent bed is believed to counteract the formation of strong carbon dioxide adsorption sites on the alumina surface which typically cause the problem of achieving levels of CO₂ concentration below 1 ppm. The bake out accomplishes this CO₂ removal without the need for larger adsorption beds that would give rise to large vent gas losses. The feed gas steam is typically atmospheric air to be treated upstream of its being introduced into a cryogenic distillation unit. The process according to the invention is therefore suitable for use in a pressure swing adsorption pre-purification unit designed to remove water, carbon dioxide and other trace impurities in the atmospheric air upstream of its introduction into the distillation unit.

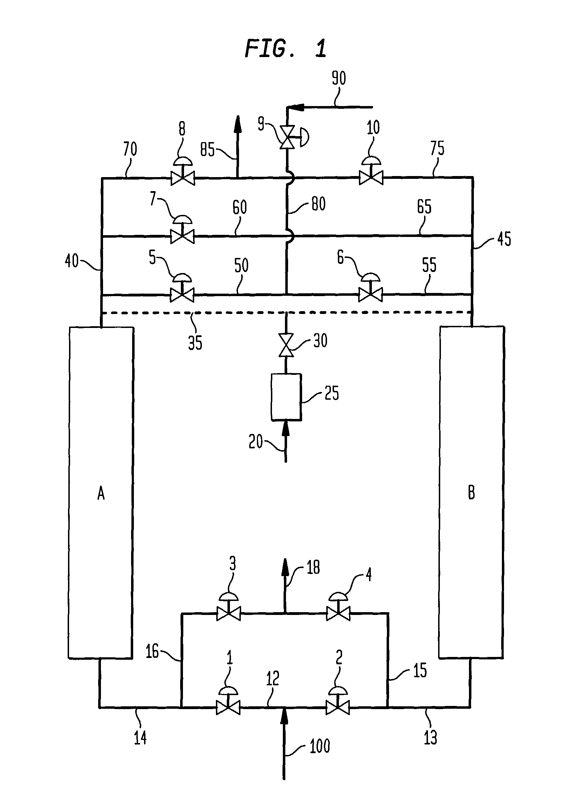

The process according to the invention will now be further described by way of example with reference to the accompanying drawing which is a schematic diagrammatic representation of a PSA apparatus.

In the PSA apparatus shown in the drawing each bed is subjected to a cycle of operations comprising the steps of feed with gas stream, blow down from high to ambient pressures, purged with waste gas and re-pressurization from ambient to higher feed pressure. The adsorption step of the present invention can be carried out in any of the usual and well-known pressures employed for gas phase pressure swing adsorption processes. This pressure envelope may vary, but it is dependent upon the pressure at which adsorption takes place as well as the pressure at which desorption of the gas occurs. Typically, this ranges about 20 bara in the adsorption step to about 0.05 bara in the purge step with the range of about 10 bara to about 0.15 bara preferred, and a range of about 6 bara to about 1 bara most preferred. The temperature at which the process is carried out typically ranges from about 5°C to about 35°C for the adsorption step. However, temperatures as high as 200°C can be employed.

With reference now to the drawing, a two bed pressure swing adsorption pre-purification process is shown. Two beds A and B are employed in this process. The cycle begins with the valves 1, 4 and 8 open so that a gas stream, typically air, fed at high pressure flows via lines 100, 12 and 14 into bed A. Product gas (i.e. purified air) flows out of bed A and passes out of the apparatus via lines 40 and 85. Bed B is at the same time depressurized through lines 13, 15 and 18. As feed continues into the bed A, the bed B is now purged. This entails opening valves 6 and 9 to permit purge gas to flow via lines 90, 80 and 55 into the bed B and to purge impurities therefrom via lines 13, 15 and 18. With the feed gas continuing to flow into the bed A, the valves 4 and 6 are now closed and the valve 7 is opened. As a result a part of the product gas flows via the lines 60, 65 and 45 into the bed B and the bed B is (re)pressurized. Once (re)pressurization finishes in Bed B, valves 1, 7 and 8 are closed, and valves 2, 3 and 10 are opened. Bed A begins depressurization whereas bed B is now employed to purify the feed gas. Thus gas flows out of bed A to vent line 18 via lines 14 and 16 while feed gas flows via lines 100 and 13 into bed B and is purified therein. Purified product gas flows out of bed B and passes to outlet line 85 via lines 45 and 75. In the next step of the process, valves 5 and 9 are opened and purge gas flows from line 90 via lines 80 and 50 into bed A. Impurities are purged from the bed A and flow to the vent line 18 via lines 14 and 16. In the final step of the process, bed A is repressurized, so the valves 3, 5 and 9 are now closed and the valve 7 opened. This permits product gas to flow via lines 65, 60 and 40 into bed A.

As shown in the drawing, the apparatus includes an additional line 20 communicating with a source of inert gas (not shown). A heater 25 and a valve 30 are located in the line 20. In operation, heated gas flows through valve 30 to line 35 which connects both to line 40 and lines 45 entering beds A and B, respectively. During a typical cycle, the heater will be activated and will be able to provide the heated inert gas to either beds A or B. During the cycle itself, during the depressurization steps of the PSA cycle, valve 30 may be opened up and allow hot air to enter either of the beds which is undergoing depressurization. This step improves the efficiency of the overall cycle and makes the overall PSA PPU process more robust and vigorous. In accordance with the invention, the adsorbent in beds A and B is subjected to preliminary contact with hot inert gas over a prolonged period of time before the apparatus is used to purify air.

Table 1 demonstrates a typical PSA PPU cycle and sequence of valves open as well as their timing. The following examples are demonstrations of the present invention and should not be construed as limiting thereof.

**Table 1.**

| Typical PSA PPU Cycle and Sequence of Valves Opening | | | | |
|---|---|---|---|---|
| Steps | | Valves Open | Duration-1 (seconds) | Duration-2 (seconds) |
| Bed A | Bed B | | | |
| Pressurization | Feed | 2, 7, 10 | 360 | 150 |
| Feed | Depressurization | 1, 4, 8 | 90 | 30 |
| Feed | Purge | 1, 4, 6, 8, 9 | 510 | 540 |
| Feed | Pressurization | 1, 7, 8 | 360 | 150 |
| Depressurization | Feed | 2, 3, 10 | 90 | 30 |
| Purge | Feed | 2, 3, 5, 9, 10 | 510 | 540 |

The invention is further illustrated in the following Examples.

### Example 1 (Comparative)

Experiments were carried out in a PSA PPU unit containing two identical 5.24 inch inside diameter beds having a bed height of 86.5 inches. The bed was packed with four inches of ceramic balls at the bottom and 82.5 inches of Alcoa H-156 (7x14 Tyler mesh) adsorbent. The Alcoa H-156 adsorbent is a composite adsorbent containing about 60% by weight of activated alumina and about 40% by weight of zeolite 4A. This is commercially available zeolite composite adsorbent.

The pressure swing adsorption experiments were run with the feed air containing 350 to 400 ppm carbon dioxide at 77.5 psia and 25°C. The regeneration was performed with carbon dioxide free dry nitrogen. The purge to feed ratio (P/F) defined by the following equation was about 2.2.
P/F = (F_{purge} x t_{purge} x P_{feed})/(F_{feed} x t_{feed} x P_{purge}) wherein F_{feed} equals the feed flow rate and standard cubic feet per minute, F_{purge} equals the purge flow rate and standard cubic feet per minute, t_{feed} equals the feed duration in seconds, t_{purge} equals the purge duration in seconds, P_{feed} equals the feed pressure at bottom of bed in pounds per square inch atmospheric, P_{purge} equals purge pressure at bottom of bed in pounds per square inch atmospheric.

The cycle time listed in Table 1 Duration-1 was employed. It took more than two weeks to remove carbon dioxide from air down to less than 3 ppb carbon dioxide. CO₂ concentration profiles inside the H-156 bed were measured after CO₂ concentration and product had reached 3 ppb. The adsorbent specific products for different CO₂ concentrations in product were determined from these CO₂ concentration profiles. The adsorbent specific products are adsorbent specific product for 1 ppm CO₂ in product equals 11.5 standard cubic foot/pound of H-156. Adsorbent specific product for 3 ppb CO₂ in product equals 4.9 standard cubic foot/pound of H-156. The adsorbent specific product for 1 ppm CO₂ in product is about 2.3 times the adsorbent specific product for 3 ppb CO₂ in the product. This result clearly demonstrates that activated alumina adsorbent mixture is effective to remove CO₂ from air down to 1 ppm, but less effective when the carbon dioxide has to be reduced to parts per billion levels.

### Example 2

The two H-156 adsorbent beds used in Example 1 were thermally treated simultaneously at 100°C and under a nitrogen flow for about 20 hours and cooled under the same nitrogen stream for four hours. The nitrogen flow rate for both bed A and bed B was 15 scfm. PSA PPU cyclic experiments were carried out on the thermally treated H-156 bed at similar experimental conditions to those used in Example 1. Cycle times used are listed as Duration-2 from Table 1. The purge to feed ratio in this run was 2.6. CO₂ was very efficiently removed from about 400 ppm in the feed to less than 1 ppb in the product. The adsorbent specific product for 3 ppb CO₂ in product increased from 4.9 in untreated H-156 bed to 11.5 scf/pound of H-156 in the thermally treated H-156 bed. This clearly demonstrates that the thermally treated H-156 has a much better performance than untreated H-156.

## Claims

1. A pressure swing adsorption process for removing carbon dioxide and water vapour from a feed gas comprising repeatedly performing, in sequence, the steps of:
a) introducing said feed gas into an adsorption bed containing at least one adsorbent effective to remove the carbon dioxide and water vapour from the feed gas;
b) depressurizing said adsorbent bed; and
c) purging said adsorbent bed with the gaseous effluent from said bed or with another gas that is substantially free of carbon dioxide thereby desorbing carbon dioxide from said bed, **characterised in that** immediately prior to the first sequence the adsorbent is subjected to a thermal bake out.

2. A process according to claim 1, wherein from 2 to 8 beds are present.

3. A process according to claim 1 or claim 2, wherein said feed gas is air.

4. A process according to any one of the preceding claims, wherein said purified feed gas is fed to a cryogenic distillation unit.

5. A process according to any one of the preceding claims, wherein said adsorbent bed comprises an adsorbent mixture comprising activated alumina and zeolite.

6. A process according to claim 5, wherein said zeolite is X type zeolite.

7. A process according to claim 6, wherein said X type zeolite is sodium X zeolite with a silicon to alumina elemental ratio between 0.9 and 1.3.

8. A process according to any one of the preceding claims, wherein said bake out is performed at a temperature in the range of from 50°C and 750°C.

9. A process according to any one of the preceding claims, wherein said bake out occurs with inert gas passing through said adsorbent bed.

10. A process according to any one of the preceding claims, wherein said bake out is additionally performed intermittently during the pressure swing adsorption process.
